# EUROPEAN PATENT APPLICATION

(11) **EP 4 744 938 A1**
(43) Date of publication of application: **20.05.2026**
(21) Application number: 25209780.3
(22) Date of filing: 20.10.2025
(51) Int. Cl.: B60L 3/12, B60L 15/20, B60L 50/60, B60L 7/18

(54) **SELF-CHARGING SYSTEM FOR VEHICLES**

(30) Priority: 13.11.2024 ES 202432111 U
(71) Applicant: Romero Fernández, José Luis, 46900 Torrent Valencia (ES)
(72) Inventor: Romero Fernández, José Luis, 46900 Torrent Valencia (ES)
(74) Representative: Sánchez Paulino, Francisco Javier

(57) **Abstract**

A self-charging system for vehicles that harnesses the kinetic energy of the wheels to generate electricity, comprising a multiplier unit (1) engaging with the axles (2) of each wheel (3) and a generator (4) which converts mechanical energy into electrical energy. The electrical energy generated is then stored in a set of batteries (5).

## Description

### PURPOSE OF THE INVENTION

The purpose of this invention, as indicated in the title, is a self-charging system for vehicles that harnesses the kinetic movement of the wheels to generate energy. This innovation offers previously unknown advantages over existing technologies.

This invention is characterised by the specific functional and structural features of its components, all of which contribute to a self-charging system for vehicles that maximises the energy efficiency of electric vehicles. By harnessing the kinetic movement of the wheels, this system converts the energy generated during motion into electricity, which can be stored in batteries for later use.

### TECHNICAL FIELD

Therefore, this invention falls within the field of self-charging devices for electric vehicles.

### BACKGROUND OF THE INVENTION

Over the last decade, the world has witnessed a significant shift towards the adoption of more sustainable technologies, particularly in the transportation sector. Electric vehicles have emerged as a viable solution for reducing carbon emissions and decreasing our reliance on fossil fuels. However, one of the persistent challenges in the widespread adoption of these vehicles is their limited range compared to internal combustion engine vehicles. Self-charging systems address this issue, offering an innovation that has the potential to transform the user experience and accelerate the transition to a greener future.

The limited range of electric vehicles is an issue affecting both consumers and manufacturers. Although battery capacity and charging times have improved significantly, there remains widespread concern about the possibility of running out of charge on a long journey. This has given rise to so-called "range anxiety," a factor that discourages many potential buyers.

Self-charging systems can provide a solution to this problem by enabling vehicles to recharge their batteries while in motion or parked. Imagine a scenario in which a vehicle can harness solar energy, regenerative braking, or even wireless charging from road infrastructure to keep its battery continuously charged. This would not only increase the vehicle's effective range but also reduce reliance on conventional charging stations.

Self-charging systems benefit not only individual users but also have a significant impact on the environment and the economy. By making electric vehicles more efficient and extending their range, the number of necessary charging stops is reduced. This, in turn, lowers electricity demand at charging stations, easing pressure on power grids and decreasing emissions associated with energy generation.

From a financial perspective, the implementation of self-charging systems could reduce the total cost of ownership for users. By minimising the time and money spent on charging the vehicle, consumers could achieve a faster return on their initial investment in an electric vehicle. Furthermore, this could encourage more people to switch to electric vehicles, stimulating the market and promoting continuous innovation in the sector.

With reference to the current state of the art, it should be noted that, although various self-charging systems for vehicles already exist, there is no known system presenting technical, structural, or constitutive features identical or similar to those claimed in this invention.

### EXPLANATION OF THE INVENTION

The invention relates to a self-charging system for vehicles, designed to improve energy efficiency and extend the range of electric vehicles. In this context, the invention provides a self-charging system that harnesses the kinetic energy generated by the vehicle's wheels during motion.

Specifically, as noted above, the invention comprises a self-charging system that includes a multiplier unit engaging with the axles of each wheel, optimised to maximise the efficiency of mechanical energy transmission. Connected to this multiplier unit is a generator that converts mechanical energy into electrical energy, which is then stored in a battery assembly.

The system includes sensors that monitor the revolutions per minute (rpm) of the wheels. If the vehicle is moving at low speed, a programmable logic controller activates the multiplier unit. When the wheels reach a speed sufficient to generate energy on their own, the controller disconnects the multiplier unit, ensuring efficient operation of the system.

The self-charging system for vehicles not only represents a significant advancement in energy efficiency but also contributes to reducing reliance on external charging stations. This is particularly beneficial in remote areas or locations with limited charging infrastructure.

Unless otherwise stated, all technical and scientific terms used in this specification have the meanings commonly understood by a person skilled in the relevant art. In implementing this invention, procedures and materials similar or equivalent to those described herein may be used.

### BRIEF DESCRIPTION OF THE DRAWINGS

To complement the description provided and to assist in a better understanding of the features of the invention, this specification is accompanied, as an integral part thereof, by figures in which the following is illustrated by way of example and not limitation:

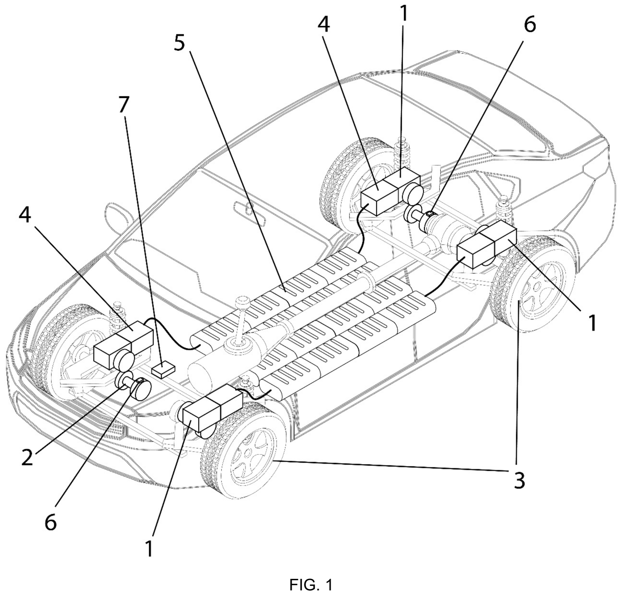

Figure 1 is a representation of the self-charging system for vehicles.

### PREFERRED EMBODIMENT OF THE INVENTION

With reference to the figures, a preferred, though non-limiting, embodiment of the proposed invention is described, which consists of a self-charging system for vehicles.

As shown in the figures, the self-charging system comprises a multiplier unit (1) designed to engage with the axles (2) of each wheel (3) of the vehicle.

Connected to the multiplier unit (1) is a generator (4), which converts mechanical energy into electrical energy. The electrical energy generated is then stored in a set of batteries (5).

Sensors (6) measure the revolutions per minute (rpm) of each wheel (3). When the vehicle is moving at low speed and does not produce sufficient revolutions per minute (rpm) to generate electrical energy effectively, a programmable logic controller (7) activates the multiplier unit (1).

Once the sensors (6) detect that the wheels (3) have reached a speed sufficient to generate energy on their own, the programmable logic controller (7) disconnects the multiplier unit (1), allowing the system to operate efficiently.

Having adequately described the nature of the invention and how it may be implemented, no further explanation is considered necessary for a person skilled in the art to understand its scope and advantages. **It** should be noted that, in its essential form, the invention may be embodied in other implementations that differ in detail from the example provided, and such embodiments shall be covered by the protection sought, provided the fundamental principle of the invention remains unchanged.

## Claims

1. A self-charging system for vehicles, comprising: a multiplier unit (1) that engages with the axles (2) of each wheel (3) of the vehicle and is connected to a generator (4), which converts mechanical energy into electrical energy and stores it in a battery (5); and a programmable logic controller (7) configured to activate the multiplier unit (1) when the revolutions per minute (rpm) of each wheel (3), as measured by sensors (6), are low.
